# EUROPEAN PATENT APPLICATION

(11) **EP 4 529 121 A1**
(43) Date of publication of application: **26.03.2025**
(21) Application number: 24201838.0
(22) Date of filing: 23.09.2024
(51) Int. Cl.: H04L 45/302, H04L 45/74

(54) **METHODS FOR PROVIDING SUBSCRIBER AWARE NETWORK TRAFFIC ROUTING IN A 5G CORE NETWORK**

(30) Priority: 22.09.2023 US 202363539881 P
(71) Applicant: F5, INC., Seattle, WA 98104 (US)
(72) Inventor: MARUSE, Akihiko, Seattle (US); LUCIA, Jarrod James, Seattle (US); WELLS, Vernon R., Seattle (US); VORA, Rut, Seattle (US)
(74) Representative: Savi, Massimiliano

(57) **Abstract**

Methods, non-transitory computer readable media, network traffic management devices and network traffic management systems for providing subscriber aware network traffic routing in a 5G network are illustrated. With this technology, a segment routing policy is received from a controller. The segment routing policy includes a plurality of subscriber identities, associated service levels and micro service instances. One or more data packets are received from a user device and the subscriber identity associated with the data packets is identified. Based on the subscriber identity and the segment routing policy, a destination micro service instance is identified and the one or more data packets are forwarded to the destination micro service instance.

## Description

This technology relates to methods and systems for providing subscriber aware network traffic routing in a 5G core network.

### BACKGROUND

5G is a global wireless standard representing the fifth generation of cellular network technology. In contrast to 4G technology, 5G introduces the use of high band (i.e., millimeter wave) frequencies that, while more limited in range than their low and mid-band frequency counterparts, can offer much faster data transfer speeds, thereby enabling new levels of service and new technological applications. Another advantage of 5G is that it provides for network function virtualization (NFV), which decouples network functions from proprietary hardware so that network functions can run as software on standardized hardware, which makes the network more flexible by minimizing dependence on specific hardware.

Like previous mobile network generations, the 5G core network provides access to services for devices while providing service providers the functions they need to authenticate, authorize and manage their customers. However, the architecture of the 5G core network provides extended capabilities that provide advantages over previous generations. Software-defined and built with a service-based architecture (SBA), this architecture allows the 5G core to be disaggregated, cloud-native and distributed. One of the many advantages of a 5G core is that the location of network functions (NFs) can be optimally placed to ensure the greatest efficiency, highest performance and lowest latency.

5G core networks include mobile gateways (e.g., UPFs) that are used to receive network traffic from user devices and route the network traffic to the Internet. Conventionally, traffic from various users is aggregated and sent to a particular Kubernetes cluster of a plurality of Kubernetes clusters, where the traffic then must be disaggregated and distributed to various nodes of the cluster using conventional routing methods, such as for example, round-robin style routing. However, this approach is inefficient, difficult to scale and does not allow for subscriber-aware policies to be implemented on traffic flows associated with particular subscriber identities. Furthermore, conventional architectures present scaling challenges due to utilizing cpu intensive load balancing schemes mandated by the unnecessary aggregation of traffic to later disaggregate based on subscribers, which can also lead to inefficient traffic paths when multiple vendor functions are at play.

Therefore, it is desirable to create a system for providing subscriber-aware network traffic management within a 5G core network that allows for traffic flows to be associated with particular subscriber identities that can enable end-to-end monitoring of the network, allowing for particular traffic flows to be directed in a manner that enables particular service levels and/or policies to be applied to particular traffic flows based on the subscriber identity associated with the traffic flow.

### SUMMARY

A method implemented by network traffic management device that includes receiving a segment routing policy from a controller. The segment routing policy includes a plurality of subscriber identities. Each of the plurality of subscriber identities are associated with a service level and a micro service instance of a plurality of micro service instances. One or more data packets are received from a user device. A subscriber identity associated with the one or more data packets is identified. A destination micro service instance is determined based on the subscriber identity and the segment routing policy. The one or more data packets are forwarded to the destination micro service instance.

A network traffic management device includes a memory including programmed instructions stored thereon and one or more processors configured to be capable of executing the stored programmed instructions to receive a segment routing policy from a controller. The segment routing policy includes a plurality of subscriber identities. Each of the plurality of subscriber identities are associated with a service level and a micro service instance of a plurality of micro service instances. One or more data packets are received from a user device. A subscriber identity associated with the one or more data packets is identified. A destination micro service instance is determined based on the subscriber identity and the segment routing policy. The one or more data packets are forwarded to the destination micro service instance.

A non-transitory computer readable medium having stored thereon instructions for including executable code that, when executed by one or more processors, causes the processors receive a segment routing policy from a controller. The segment routing policy includes a plurality of subscriber identities. Each of the plurality of subscriber identities are associated with a service level and a micro service instance of a plurality of micro service instances. One or more data packets are received from a user device. A subscriber identity associated with the one or more data packets is identified. A destination micro service instance is determined based on the subscriber identity and the segment routing policy. The one or more data packets are forwarded to the destination micro service instance.

A network traffic management system comprising one or more network traffic management devices, controllers or data processing units with memory comprising programmed instructions stored thereon, and one or more processors configured to be capable of executing the stored programmed instructions to receive a segment routing policy from a controller. The segment routing policy includes a plurality of subscriber identities. Each of the plurality of subscriber identities are associated with a service level and a micro service instance of a plurality of micro service instances. One or more data packets are received from a user device. A subscriber identity associated with the one or more data packets is identified. A destination micro service instance is determined based on the subscriber identity and the segment routing policy. The one or more data packets are forwarded to the destination micro service instance.

This technology provides a number of advantages including providing methods, non-transitory computer readable media, network traffic management devices, and network traffic management systems that can providing subscriber aware network traffic routing in a 5G core network that allows for end-to-end monitoring of the network, which allows for more effective routing, service assurance for a service path and application of various services and policies to particular traffic flows.

### BRIEF DESCRIPTION OF THE DRAWINGS

FIG. 1A is a reference point representation block diagram of an exemplary 5G system architecture;
FIG. 1B is a service-based representation block diagram of an exemplary 5G system architecture;
FIG. 2 is a block diagram of conventional traffic distribution in a 5G core network;
FIG. 3 is a block diagram of an exemplary subscriber aware network traffic routing in a 5G network according to embodiments of the present disclosure;
FIG. 4 is a block diagram of an exemplary network traffic management device;
FIG. 5 is a block diagram of an exemplary DPU-based programmable N6 disaggregation logic platform architecture of a 5G core network;
FIG. 6 is a block diagram of an N6/SGi-LAN architecture having an N6 controller; and
FIG. 7 is a flow diagram of an exemplary method for providing subscriber aware network traffic management within a 5G core network.

### DETAILED DESCRIPTION

In the following description, for the purpose of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

It will be further understood that: the term "or" may be inclusive or exclusive unless expressly stated otherwise; the term "set" may comprise zero, one, or two or more elements; the terms "first", "second", "certain", and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

A "computer system" refers to one or more computers, such as one or more physical computers, virtual computers, and/or computing devices. As an example, a computer system may be, or may include, one or more server computers, cloud-based computers, cloud-based cluster of computers, virtual machine instances or virtual machine computer elements such as virtual processors, storage and memory, data centers, storage devices, desktop computers, laptop computers, mobile devices, or any other special-purpose computing devices. Any reference to a "computer system" herein may mean one or more computers, unless expressly stated otherwise. When a computer system performs an action, the action is performed by one or more computers of the computer system.

A "client," "client device," "user equipment" and/or "user equipment device" refers to a combination of integrated software components and an allocation of computational resources, such as memory, a computing device, and processes on a computing device for executing the integrated software components. The combination of the software and computational resources are configured to interact with one or more servers over a network, such as the Internet. A client may refer to either the combination of components on one or more computers, or the one or more computers. User equipment may be any device that is used directly by an end-user to communicate with a network and may include devices such as, for example, handheld telephones, smartphones, laptop computers equipped with a mobile broadband adapter, or any other such device that is capable of connecting to a radio access network (RAN), Wi-Fi network, or any other such network.

A "server" (also referred to as a "server system" or "server computer system") refers to a combination of integrated software components and an allocation of computational resources, such as memory, a computing device, and processes on the computing device for executing the integrated software components. The combination of the software and computational resources provide a particular type of function on behalf of clients of the server. A server may refer to either the combination of components on one or more computers, or the one or more computers. A server may include multiple servers; that is, a server may include a first server computing device and a second server computing device, which may provide the same or different functionality to the same or different set of clients.

As used herein, the term "micro service" or "network function" (NF) may refer to a component of a network infrastructure that provides a well-defined functional behavior (e.g., routing, switching, etc.). An NF may be a functional building block within a network infrastructure, which has well-defined external interfaces and a well-defined functional behavior. NFs may be a network node, a physical appliance or a software implementation of a previously physically implemented network functionality. As used herein, NF may refer to physical network functions (PNFs), virtualized network functions (VNFs), and/or to cloud-native network functions (CNFs). A CNF is a service that performs network duties in the form of micro services (as opposed to purpose-built hardware) due to the nature of distributed architectures. While micro services are generally small instances of generic software that are not limited to NFs and a CNF may be constructed from multiple types of micro services, in the context of NFs the term "micro service" may also be used interchangeably with the term "CNF." However, while other NFs such as PNFs and VNFs are network services, they are generally not considered "micro" in terms of the footprint of the solution. The term "micro service instance" may refer to a particular component of a Kubernetes or N6 Service cluster comprised of CNFs.

This document generally describes systems, methods, devices and other techniques for providing subscriber aware network traffic routing in a 5G core network. Conventional methods of routing network traffic in a 5G core network aggregate network traffic at mobile gateways, which is then sent to a particular cluster of micro services where it must be disaggregated and is distributed in a quasi-random (e.g., round-robin) fashion to various nodes/micro services within the cluster. Various products, such as policy, security and/or subscriber based firewall products may be distributed like micro services, such that there may be thousands of instances of such products spread across the system. However, for such products to operate successfully, all traffic from a particular user must be sent to the same instance of the micro service. As conventional routing within a 5G core network lacks subscriber awareness and as described above, quasi-randomly distributes traffic flows among different instances of micro services, conventional approaches do not allow for the successful operation of such policy, security and subscriber based products. However, embodiments of the present disclosure provide techniques for providing subscriber-aware routing of network traffic that allows a particular traffic flow associated with a particular user identity to be routed to a particular micro service instance, such that such policies and services can be applied to the traffic flow.

As will be described in greater detail below, embodiments of the present invention utilize collocation of a SRv6 container at the mobile gateway that allows for traffic flows to be routed to particular micro service instances based on a known subscriber identity associated with the traffic flow. In some embodiments, the SRv6 container may be included as part of a data processing unit (DPU) or card that includes a subscriber binding table that can be used to determine a subscriber identity associated with network traffic and logic for routing the network traffic to particular micro service instances based on, for example, the subscriber identity and/or one or more service levels associated with the subscriber identity. The DPU can be plugged into a subscriber gateway box (e.g., via a CPU socket) such that network traffic received by the subscriber gateway box is received and processed by the DPU. The DPU may receive an IP data packet having a source IP address and a destination IP address and it may compare the source IP address to a subscriber binding table to determine a subscriber identity associated with the IP data packet. The DPU may contain a SRv6 container having a segment routing policy, which provides logic for how to route packets based on their identified subscriber identities and their associated services. For example, the DPU may include a table with millions of entries that associate subscriber identities, services and destination micro service instances. By routing particular traffic flows to particular micro service instances, the disclosed techniques allow for policies and services to be applied to particular traffic flows. For example, a particular micro service instance may be configured to apply a particular security policy, such as for example, filtering out age-restricted content. Thus, because all of the traffic for a particular traffic flow is routed to a particular micro service instance that implements the particular security policy, the micro service instance can apply the security policy to all traffic between it and the user device associated with the subscriber identity thereby providing an effective application of the policy. Likewise, in other examples, particular micro service instances can be configured to provide particular service levels (e.g., premium service vs. non-premium service) and because the system is subscriber-aware (including awareness of associated subscriptions/policies), the system can effectively ensure appropriate levels of service that particular users are subscribed to by routing their traffic to micro service instances that are configured to provide the corresponding service level.

Furthermore, embodiments of the present disclosure may include a controller that monitors the network, interacts with service providers to obtain information regarding user subscriptions/service levels and communicates/updates the segment routing policy to the DPUs deployed in the network. The controller can monitor the load on each of the micro service instances and if a particular micro service instance is becoming overloaded the controller can determine that some of the traffic should be rerouted to a different micro service instance or alternatively may cause (e.g., via a Kubernetes platform) a new micro service instance to be instantiated to handle some of the traffic. Thus, according to some embodiments, the controller may maintain an end-to-end view of the network, allowing it to determine a best path and/or optimal action for routing traffic (e.g., redirecting traffic to another micro service instance or causing a new micro service instance to be instantiated). As will be appreciated by those of skill in the art, one of the benefits of the cloud-native approach is that micro service instances (or network functions) can dynamically scale up and down, and embodiments of the present disclosure advantageously provide for intelligent decision making (e.g., rerouting traffic to alternative micro service instances or instantiating new micro service instances) that can result in more efficient scaling decisions. Additionally, the controller may communicate with and be provisioned by service providers that provide information about services and service levels subscribed to by users. For example, YouTube may communicate with the controller to let the controller know that User1 is a premium subscriber. This premium subscription may be associated with a particular service level and/or policies that can be implemented by a particular micro service instance. Thus, the controller may generate and/or update the segment routing policy based on information about subscribers that may be used to select particular micro service instances to direct the subscriber's traffic to in order to achieve the associated service levels and/or apply the associated policies. In this way, embodiments of the disclosure can provide service assurance for service levels and policies subscribed to by users.

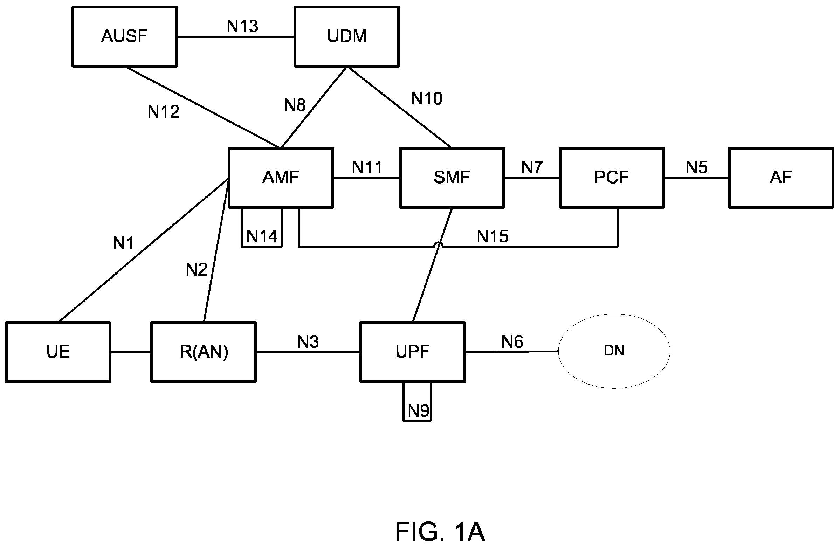

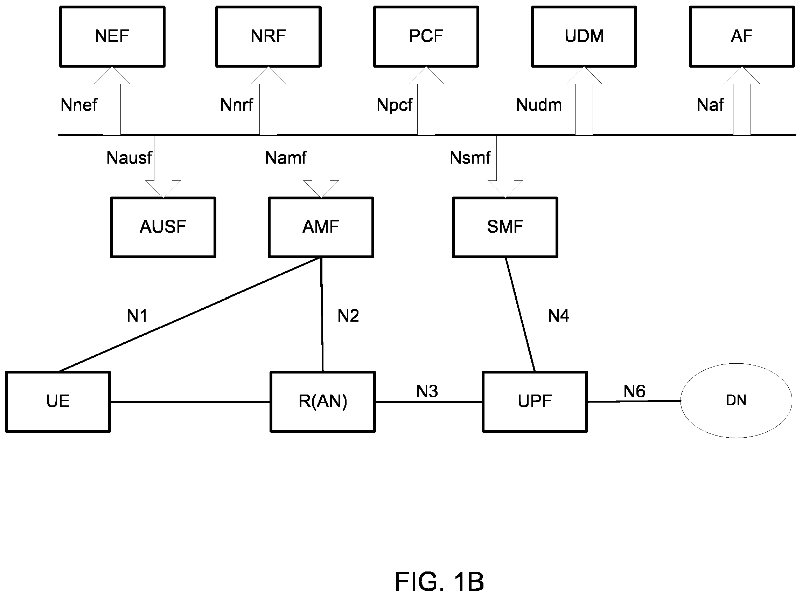

Referring to FIGS. 1A and 1B, an exemplary reference point representation and an exemplary service-based representation of a 5G Core (5GC) network architecture is shown, as defined by the 3GPP standard. As will be understood by those of ordinary skill in the art, the reference point representation focuses on the interactions between pairs of network functions defined by point-to-point reference point (e.g., N7) between any two network functions (e.g., SMF and PCF) and is used when some interaction exists between any two network functions. Further, while the service-based representation also includes point-to-point reference points between the NFs where necessary (e.g., see lower portion of FIG. 1A), the upper portion of the figure (i.e., the 5GC Control Plane) has a "bus" and a service-based interface exhibited by individual function. This creates what is referred to as a Service Based Architecture (SBA), in which one CP network function (e.g., SMF) allows any other authorized NFs to access its services. Per the 3GPP standard, NFs within the 5GC Control Plane shall only use service-based interfaces for their instructions.

The 5G Core is made up of the following network functions: Access and Mobility Management function (AMF), Session Management function (SMF), User plane function (UPF), Policy Control Function (PCF), Authentication Server Function (AUSF), Unified Data Management (UDM), Application Function (AF), Network Exposure function (NEF), NF Repository function (NRF) and the Network Slice Selection Function (NSSF). As will be appreciated by those of ordinary skill in the art, all of these NFs are well-known and are defined by the standards organization 3GPP. Nevertheless, a brief overview of some of the functionalities of each are provided herein for reference:

The AMF may support termination of NAS signaling, NAS ciphering and integrity protection, registration management, connection management, mobility management, access authentication and authorization and security context management.

The SMF may support session management (e.g., session establishment, modification and release), UE IP address allocation and management, DHCP functions, termination of NAS signaling related to session management, DL data notification and traffic steering configuration for UPF for proper traffic routing.

The UPF may support packet routing and forwarding, packet inspection, QoS handling, acts as external PDU session point of interconnect to Data Network (DN) and is an anchor point for intra- and inter-RAT mobility.

The PCF may support unified policy framework, providing policy rules to CP functions and access subscription information for policy decisions in UDR.

The AUSF may act as an authentication server.

The UDM may support generation of Authentication and Key Agreement (AKA) credentials, user identification handling, access authorization and subscription management.

The AF may support application influence on traffic routing, accessing NEF, and interaction with policy framework for policy control.

The NEF may support exposure of capabilities and events, secure provision of information from external application to 3GPP network and translation of internal/external information.

The NRF may support service discovery function and maintains NF profile and available NF instances.

The NSSF may support selecting of the Network Slice instances to serve the UE, determining the allowed NSSAI, determining the AMF set to be used to serve the UE.

As will be understood by those of ordinary skill in the art, as further depicted in FIGS. 1A and 1B, a user equipment (UE) device (e.g., a smartphone) may access the 5G Core by connecting to a Radio Access Network (R(AN)) (e.g., a cellular network), and may ultimately access an external Data Network (DN). The 5G architecture also may include other network devices such as routers or switches, for example, which are known in the art and thus will not be described herein.

The user equipment (UE) devices of the 5G network architecture in this example include any type of computing device that can exchange network data, such as mobile, desktop, laptop, or tablet computing devices, virtual machines (including cloud-based computers), or the like. Each of the UE devices includes a processor, a memory, and a communication interface, which are coupled together by a bus or other communication link (not illustrated), although other numbers or types of components could also be used.

The UE devices may run interface applications, such as standard web browsers or standalone client applications. The interface applications may provide an interface to make requests for, and receive content stored on, one or more of server devices that are part of the data network (DN). The UE devices may further include a display device, such as a display screen or touchscreen, or an input device, such as a keyboard for example (not illustrated).

Although the exemplary 5G system architecture with NTMD, UE device, R(AN), DN and various NFs are described and illustrated herein, other types or numbers of systems, devices, components, or elements in other topologies can be used. It is to be understood that the systems of the examples described herein are for exemplary purposes, as many variations of the specific hardware and software used to implement the examples are possible, as will be appreciated by those skilled in the relevant art(s).

One or more of the components depicted in the 5G system architecture, such as the NTMD and various NFs, for example, may be configured to operate as virtual instances on the same physical machine. In other words, one or more of the NTMD and various NFs may operate on the same physical device rather than as separate devices communicating through communication network(s).

In addition, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only, wireless traffic networks, cellular traffic networks, Packet Data Networks (PDNs), the Internet, intranets, and combinations thereof.

The examples also may be embodied as one or more non-transitory computer readable media having instructions stored thereon, such as in the memory of the NTMD, for one or more aspects of the present technology, as described and illustrated by way of the examples herein. The instructions in some examples include executable code that, when executed by one or more processors, such as the processor(s) of the NTMD may cause the processors to carry out steps necessary to implement the methods of the examples of this technology that are described and illustrated herein.

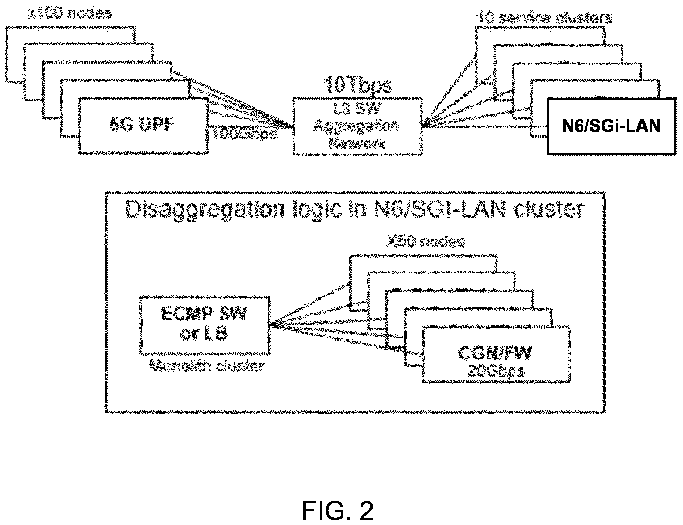

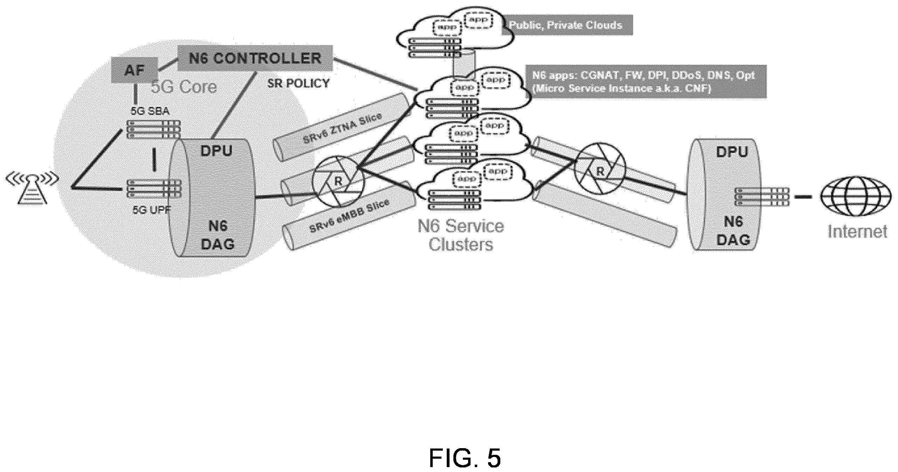

FIG. 2 depicts a block diagram of conventional traffic distribution in a 5G core network. As shown by FIG. 2, 5G networks include a plurality of mobile gateways known as 5G UPFs, which operate to route traffic/packets originating from user devices/user equipment to the Internet. Conventionally, the network traffic is aggregated by these mobile gateways (e.g., via the L3 SW Aggregation Network) and then must later be disaggregated at the N6/SGI-LAN clusters. For example, as shown in FIG. 2, conventionally, when the aggregated network traffic reaches an N6 cluster, it must be disaggregated and routed using conventional method such as for example, equal-cost multi-path (ECMP) routing, L3 switching(SW), and/or load balancing (LB) techniques followed by carrier-grade network address translation (CGN) and firewall (FW). In other words, under conventional methods routing is performed in a round-robin distribution/routing. However, performing network routing in this manner is both difficult to scale and does not allow for subscriber-aware routing.

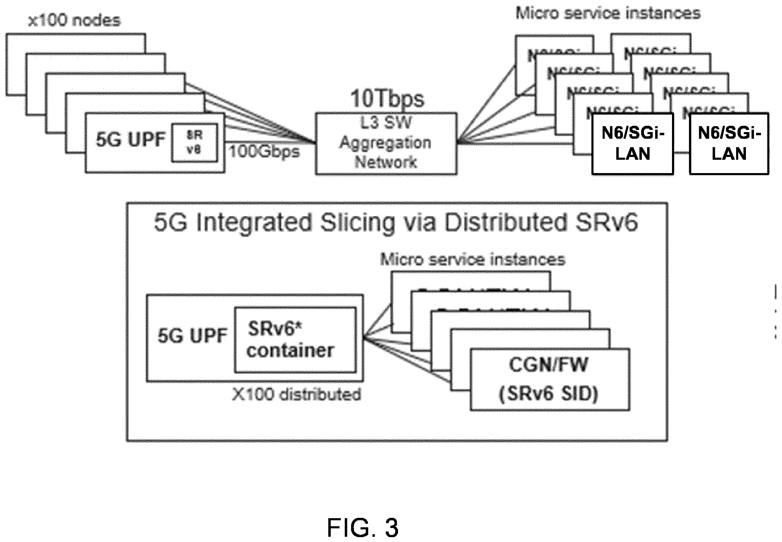

By contrast, FIG. 3 depicts a block diagram of an exemplary subscriber aware network traffic routing in a 5G network according to embodiments of the present disclosure that allows the system to perform policy-based routing (as opposed to round-robin style routing). By using a segment routing over IPv6 dataplane ("SRv6") protocol, routing tables allowing millions of entries can be utilized that allow for definitions of where to send particular traffic that is based on the subscriber identity and/or service associated with the traffic and is highly scalable. By collocating the SRv6 container with the gateway (e.g., at the 5G UPF), the system can obtain subscriber information for use in routing, allowing for end-to-end subscriber-aware routing of network data based on policies associated with each subscriber identity. In contrast to the conventional approach shown in FIG. 2, in which routing is performed based on IP addresses that are not identified with user identities, the techniques disclosed by FIG. 3 take advantage of a control plane provided by the 5G core network that indicates, for example, which IP addresses are bound to which phone numbers, thereby allowing the system to perform routing in a subscriber-aware fashion. For example, as will be appreciated by those of ordinary skill in the art, the 5G core includes a database that tracks the subscriber identity of devices (e.g., Subscriber Permanent Identifier or "SUPI"), which may for example, be tied to a SIM card of a mobile phone. The 5G core also provides similar functionality that applies to IP addresses, such that for example, if a packet is originating from a source IP address of A and a destination IP address of B, the 5G core can determine that the packet originated from SUPI-1 and therefore can determine that IP address A is bound to SUPI-1. As will be appreciated by those of skill in the art, a typical mobile device may have two or three IP addresses (e.g., IP addresses that may be separately associated with voice call functionality, data connection functionality or some other functionality) and the functionality provided by the 5G core can be used to associate all such IP addresses with a given subscriber identity/device.

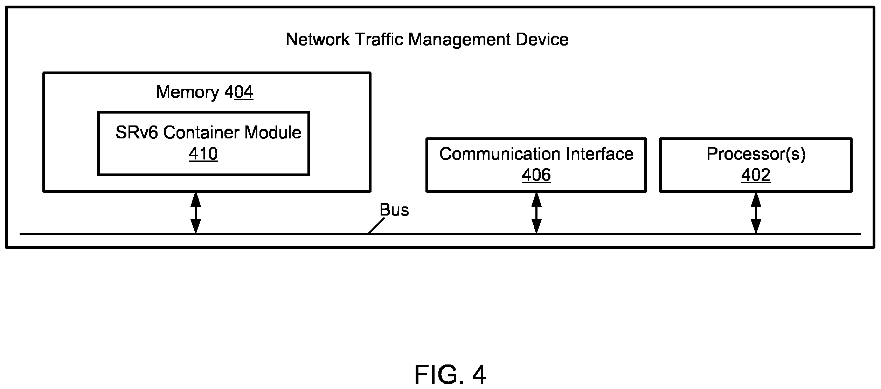

As shown in FIG. 4, embodiments of the present disclosure may include placement of SRv6 containers at network traffic management devices such as 5G UPF devices, which allows for subscriber-aware routing to particular micro service instances without requiring disaggregation at the micro service clusters. This provides advantages in efficiency, because the L3 switch shown in FIG. 3 will not require the level of intelligence that the L3 switch of the conventional implementation shown in FIG. 2 does because according to embodiments of the present disclosure, some of the functionality provided by the switch is distributed among the 5G UPF devices, thereby allowing for the efficiency of distributed computing as well as allowing the system to utilize more simple L3 switches. The techniques described herein provide further advantages because they allow, for example, for policies (e.g., security policies, service levels, etc.) to be applied to particular traffic flows, which is not feasible under the conventional architecture shown in FIG. 3 because the conventional system sends traffic to nodes/micro service instances without knowing what the traffic is such that the traffic for a particular subscriber will be spread out, thereby making it infeasible to apply a policy to the subscriber's traffic. In other words, under the conventional approach, the network traffic is routed to a particular Kubernetes cluster that may have approximately 100-200 server nodes to which the data is then randomly (e.g., using round-robin type routing techniques) sent, whereas in accordance with embodiments of the present disclosure, a more granular selection of a particular node (aka, micro service) within a cluster is selected for all of the traffic associated with a particular traffic flow to go to, thereby allowing for policies to be applied to the particular traffic flow by the particular node/micro service. For example, a particular node/micro service may apply security policies (e.g., restricting age-related content) to a particular traffic flow. Further, in some examples, a particular traffic flow may be given a particular service level by, for example, directing the particular traffic flow to a micro service instance that has a restriction on the number of traffic flows it can service at a time, thereby providing a minimum level of service. It will be understood that these are merely examples, and it is contemplated that many other types of services or policies, such as bandwidth policies, traversal path policies, destination cloud service policies, service chain policies, or security policies specific to the subscriber may be applied to traffic flows that are associated with particular user identities.

Referring now to FIG. 4, a block diagram of an exemplary network traffic management device (NTMD) is illustrated. The NTMD may perform any number of functions, including routing network traffic within a 5G core network. The NTMD in this example includes processor(s) 402, a memory 404, and a communication interface 406, which are coupled together by a bus, although the NTMD can include other types or numbers of elements in other configurations. Further, although the NTMD is described herein as a device, it should be understood that in some embodiments, the NTMD may be virtualized and some or all of the functionalities of the NTMD described herein may be embodied in the form of software. According to some embodiments, the NTMD may be a subscriber gateway. In some embodiments, the NTMD may be a device that includes a 5G user plane function (UPF). As will be appreciated by those of ordinary skill in the art, a 5G UPF may connect and route data coming from a Radio Area Network (RAN) to the Internet. Further, part of the functionality provided by a 5G SMF includes providing a binding table that associates subscriber identities (e.g., SUPIs) with IP addresses, such that the NTMD may identity subscriber identities with network traffic based on the source IP addresses of the network traffic. As described below, the NTMD may receive the binding table from an NTMD controller, which can obtain the binding table information from the SMF(s).

The processor(s) 402 of the NTMD may execute programmed instructions stored in the memory 404 of the NTMD for any number of functions described and illustrated herein. The processor(s) 402 of the NTMD may include one or more central processing units (CPUs) or general purpose processors with one or more processing cores, for example, although other types of processor(s) can also be used.

The memory 404 of the NTMD stores these programmed instructions for one or more aspects of the present technology as described and illustrated herein, although some or all of the programmed instructions could be stored elsewhere. A variety of different types of memory storage devices, such as RAM, ROM, hard disk, solid state drives, flash memory, or other computer readable medium which is read from and written to by a magnetic, optical, or other reading and writing system that is coupled to the processor(s), can be used for the memory.

Accordingly, the memory of the NTMD can store one or more modules that can include computer executable instructions that, when executed by the NTMD, cause NTMD to perform actions, such as to transmit, receive, or otherwise process network messages, for example, and to perform other actions described and illustrated below with reference to FIGS. 5-7. The modules can be implemented as components of other modules. Further, the modules can be implemented as applications, software programs, operating system extensions, plugins, or the like.

Even further, the modules may be operative in a cloud-based computing environment. The modules can be executed within or as virtual machine(s) or virtual server(s) that may be managed in a cloud-based computing environment. Also, the modules, and even the NTMD itself, may be located in virtual server(s) running in a cloud-based computing environment rather than being tied to one or more specific physical network computing devices. Also, the modules may be running in one or more VMs executing on the security server device. Additionally, in one or more examples of this technology, virtual machine(s) running on the NTMD may be managed or supervised by a hypervisor.

In this particular example, the memory of the NTMD includes an SRv6 Container module 410. According to some examples, the SRv6 Container module 410 can store a segment routing policy that can be used to route network packets. According to some embodiments, a segment routing policy may include a large table (e.g., having hundreds of thousands or millions of entries) in which each entry of the table includes a subscriber identity (e.g., a SUPI), one or more services or policies associated with the subscriber identity (e.g., "Premium YouTube service") and a destination micro service instance associated with the subscriber identity. The NTMD may receive incoming network traffic (e.g., data packets sent from a user device/user equipment) having a source IP address and a destination IP address. As will be appreciated by those of ordinary skill in the art, the NTMD can identify a subscriber identity associated with the incoming network traffic using a subscriber binding table derived via a 5G control plane, by a NTMD controller subscribing to 5G SMF's API service which publishes binding information of subscribers upon user equipment registration or de-registration to the 5G core network to generate a master subscriber binding table, at least a portion of which is then pushed to the NTMD. This information includes the latest state of subscribers, which associates or disassociates the binding of IP addresses with subscriber identities. Thus, the NTMD may use the binding table to look up a source IP address associated with a received network packet to then identify the corresponding subscriber identity associated with the network packet. The NTMD can then lookup the identified subscriber identity in the segment routing policy and direct the traffic to the destination micro service instance stored in the entry of the table that corresponds to the identified subscriber identity. According to some embodiments, the destination micro service instance corresponds to a micro service instance that is configured to provide the level of service associated with the subscriber identity. For example, if a particular subscriber identity is associated with a "YouTube Premium" service level, the destination micro service instance stored in association with that subscriber identity will be one that has been configured to provide the YouTube Premium level of service.

In some embodiments, the one or more services or policies associated with the subscriber identity stored in the segment routing policy may include a service policy ID, that may be embedded by an NTMD in a packet destined towards the micro service instance, such that a per subscriber service policy can be applied by the micro service instance. For instance, the NTMD may modify a segment routing header of a packet to include a service policy ID associated with the subscriber identity sending the packet. Thus, for illustrative purposes, in one example when a packet from a user is sent to the Internet, the source IP can be used by the NTMD to identify the associated subscriber identity (e.g., SUPI) and upon looking the subscriber identity up in the stored segment routing policy may determine a particular destination micro service instance to route the packet to, as well as determine whether any service policy ID should be included with the packet. For instance, if a particular subscriber has a service policy that provides for their network traffic to be security checked, the segment routing policy may list a destination micro service instance that for that traffic that is configured to perform a security function of sanitization of traffic. If there is a service policy ID embedded in the packet that indicates for example, the user is under-aged, then the level of sanitization of the traffic that the micro service instance that receives the packet may provide may differ from the level it would provide if a different service policy ID (or no service policy ID) were present. As will be appreciated by those of ordinary skill in the art, SRv6 is a protocol that allows for a path to multiple micro services to be defined. Thus, according to some embodiments, an initial destination microservice instance for a network packet may be derived based on cross-referencing the subscriber identity associated with the network packet with the stored segment routing policy to identify the associated destination microservice instance. However, according to some embodiments, subsequent destination microservice instances for the network packet may be determined based on a service policy ID added to the SRv6 header of the packet by the NTMD. In other words, the service policy ID may identify one or more additional hops (i.e., subsequent destination micro service instances) for the network packet to traverse following the initial destination micro service instance, thereby allowing a chain of services to be defined for a given subscriber identity (e.g., SUPI).

According to some embodiments, the NTMD may be communicatively connected to a controller that provides the segment routing policy to the NTMD. The controller may receive information about which services each subscriber identity is subscribed to and may have an end-to-end view of the network, allowing it to determine the best path for each subscriber identity's network traffic. In other words, based on the services associated with each subscriber identity and the state of the network (e.g., the loads on each of the micro service instances), the controller can determine the best destination micro service instance for each subscriber identity's traffic and will generate the segment routing policy to reflect these determinations. The controller will send the segment routing policy to all of the NTMDs deployed in the network, so that each NTMD routes traffic in accordance with the determinations made by the controller. The controller may update the segment routing policy from time to time based on changing network conditions or newly information about services of subscriber identities provided by the service providers and may push updated segment policies to the NTMDs.

Although FIG. 4 illustrates an example NTMD that contains the SRv6 container in memory, according to some embodiments, the SRv6 container and/or segment routing policy may be stored in a data processing unit (DPU) that may be an electronic storage device/card that can plug into a subscriber gateway (i.e., a NTMD). According to some embodiments, the NTMD may be a subscriber gateway or server node that can communicatively receive the DPU. For example, a server node may be a one or two rack server having a plurality of CPU sockets and the SRv6 container can be collocated with the subscriber gateway by plugging the DPU that containers the SRv6 container into a socket of the server node. Thus, by including the SRv6 container/segment routing policy on a DPU that can be communicatively connected to existing subscriber gateways, existing systems can be easily adapted to implement the techniques described herein without having to replace existing subscriber gateway equipment. In embodiments in which a DPU is used, the DPU may perform some or all of the functionality described above with respect to the NTMD. For example, the DPU may process all incoming traffic received by the NTMD to identify a subscriber identity associated with the traffic, perform a lookup in the segment routing policy to determine the corresponding destination micro service instance associated with the subscriber identity and modify the data packets to route them to the appropriate destination micro service.

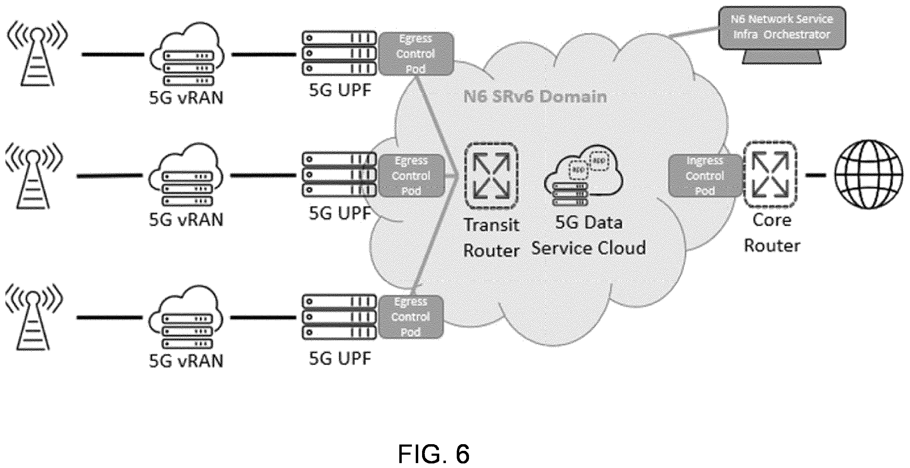

According to some embodiments, the communication interface 406 may be coupled to a communication network(s) that allow for communication with various connected network devices, for example as shown in FIGS. 5 and 6, such as for example but not limited to, one or more 5G vRAN devices, 5G SBA devices, AF devices, N6 controllers, DPUs, N6 service clusters (i.e., clusters of micro services), egress control pods, routers and any other such device as may be necessary to interact with to perform the functions described herein.. By way of example only, the communication network(s) can include local area network(s) (LAN(s)) or wide area network(s) (WAN(s)), and can use TCP/IP over Ethernet and industry-standard protocols, although other types or numbers of protocols or communication networks can be used. The communication network(s) in this example can employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like.

While the NTMD is illustrated in this example as including a single device, the NTMD in other examples can include a plurality of devices or blades each having one or more processors (each processor with one or more processing cores) that implement one or more steps of this technology. In these examples, one or more of the devices can have a dedicated communication interface or memory. Alternatively, one or more of the devices can utilize the memory, communication interface, or other hardware or software components of one or more other devices included in the NTMD. Further, as described above, in some embodiments, some of the functionality performed by the NTMD may be stored on a detachable DPU that can be plugged into the NTMD.

Additionally, one or more of the devices that together comprise the NTMD in other examples can be standalone devices or integrated with one or more other devices or apparatuses, such as one or more server devices, for example. Moreover, one or more of the devices of the NTMD in these examples can be in a same or a different communication network including one or more public, private, or cloud networks, for example.

Although the NTMD is illustrated as single device, one or more actions of each of the NTMD may be distributed across one or more distinct network computing devices that together comprise one or more of the NTMDs. Moreover, the NTMD is not limited to a particular configuration. Thus, the NTMD may contain network computing devices that operate using a master/slave approach, whereby one of the network computing devices of the NTMD operate to manage or otherwise coordinate operations of the other network computing devices. The NTMD may operate as a plurality of network computing devices within a cluster architecture, a peer-to peer architecture, virtual machines, or within a cloud architecture, for example. Thus, the technology disclosed herein is not to be construed as being limited to a single environment and other configurations and architectures are also envisaged.

Although not depicted, other devices of the system architecture shown in FIGS. 5 and 6 may include similar components to the NTMD. In particular, other such devices may include one or more processors, memory and a communication interface communicatively connected via a bus. For example, the controller depicted in FIGS. 5 and 6 may include such features, however it will be understood that the memory of the controller may store different data and instructions than the NTMD, which are configured to execute the functionalities of the controller described in further detail herein.

According to some examples, the disclosed system may discontinue the need for disaggregation per cluster by placing SRv6 based routing at the start of plain IP traffic at the N6upf (a.k.a. local to UPF), where the destination is replaced with cluster SID (IPv6 prefix) for the duration of transit. Based on central policy the set of subscribers are to be sent to assigned cluster SID via IPv6 routing. Due to this destination replacement happening before UPF traffic is aggregated by L3 switches, there is no longer the need for load balancer based disaggregation within clusters, assuming majority of CNFs will be deployed with SR-IOV interfaces for high performance requirements.

According to some embodiments, given the programmability of SRv6, the traffic KPIs observed post deployment can be used to define traffic rebalancing. Initial distribution of subscribers may lead to undesired traffic load unbalance, which can be dynamically re-balanced with SRv6 reprogramming.

In some examples, the 5G Core integration agent may subscribe to SBI Event notifications of subscriber states, which can be used as a key to define slicing profiles such as subscriber density, which shall be compliant with GMSA NEST. In some embodiments, the key may be SUPI, IMSI, S-NSSAI, GPSI, or any identity that is uniquely bound to subscriber IP addresses uelpv4Addr or uelpv6Prefix as per TS29.571.

Further, in some examples, GMSA NEST based templates can act as subscription management schemes where first class users gets guaranteed density of less than X subs, premium class density of less than Y subs, and economy class users gets undefined density.

FIG. 5 is a block diagram of an exemplary DPU-based programmable N6 disaggregation logic platform architecture of a 5G core network. As shown, the disclosed example 5G architecture includes a NTMD (i.e., 5G UPF) that may be communicatively connected to a DPU that stores the SRv6 container and/or segment routing policy, which includes logic for the porting table (i.e., N6 disaggregation logic (DAG)). The NTMD may be connected to a 5G service-based architecture (SBA) that is a 5G core infrastructure that can provide the NTMD controller (N6 controller with distributed AF probes subscribing to 5G SMF API services) with information about subscriber identities. In other words, the term "NTMD controller" may refer to the combination of the N6 controller and the AF. The AF is a distributed probe that collects the source of truth (i.e., the state of which binding or unbinding the source IP to subscriber IP happens at the SMF) from the SMFs in the network and reports it to the N6 controller, which can provide a centrally managed state for the network. In other words, the AF can function to obtain information from the SMFs that allows the NTMD controller to generate and update the subscriber binding table that associates subscriber identities (e.g., SUPIs) with source IP addresses. The NTMD controller (which may alternatively be referred to as the N6 network service infra orchestrator) manages binding information of the subscriber identities and their associated IP addresses. According to some embodiments, the NTMD controller can provide the subscriber binding information to the NTMD (e.g., intermittently or in response to determining that some binding information has been updated based on communications with the SMF(s)). The NTMD and 5G SBA are both connected to a radio access network that provides connections to the user devices/user equipment. The 5G SBA is communicatively connected to an Application Function (AF) that communicates with the 5G core and obtains event notifications of subscriber states and other subscriber information that it sends to the controller. The controller (i.e., "N6 Controller") is communicatively connected to the AF, the N6 service clusters (i.e., clusters of micro services) and the DPU and/or NTMD. As described previously above, the controller can monitor the end-to-end paths of the network and generates and updates the segment routing policy, which it pushes to the DPU/NTMD. The DPU/NTMD communicates with the N6 Service Clusters via routers/switches ("R") and via various slices. For example, the SRv6 Zero Trust Network Access (ZTNA) Slice, which provides secure remote access to applications and the SRv6 enhanced mobile broadband (eMBB) Slice, which provides high speed, capacity and mobility to allow for services such as high-definition video streaming and immersive augmented/virtual reality. The N6 Service Clusters are Kubernetes clusters that are each made up of a plurality of different micro service instances (which may also be referred to as nodes, N6 apps, cloud-native network functions (CNFs)) that each provide various 5G functions.

FIG. 6 is a block diagram of an N6/SGi-LAN architecture having a controller (aka, N6 controller or N6 network Service Infra Orchestrator). As described previously above, the controller monitors the end-to-end paths of the network from the subscriber gateways/NTMDs to the micro service instances and has awareness of the various paths involved. In some embodiments, the controller can discover new micro service instances as they arise. The controller can monitor the load on the micro service instances and modify the segment routing policy table to select a new destination micro service instance for one or more traffic flows (i.e., streams of traffic associated with particular subscriber identities) if the load on a current micro service instance is becoming too great. For example, the N6 Service Cluster(s) shown in FIG. 5 has cluster controller services that monitors instantiations and/or deletions of micro services, which can then report such changes to the N6 controller. The N6 controller can run policy-based path determination logic based on congestion and/or subscription policy to redefine a new destination or path that accommodates the updated changes to the service cluster. The new destination can be applied immediately, be event-triggered, or be scheduled. Further, the controller can also determine whether to cause new micro service instances to be instantiated in order to relieve the burden of overloaded micro service instances. In this way, the controller can perform a load balancing function, while also ensuring that traffic flows receive the appropriate service levels that are inline with the services subscriptions associated with the subscriber identity. Further, the controller can communicate with service providers (e.g., YouTube) to receive information about which services levels and policies each subscriber identity is subscribed to. Updates to services that particular subscriber identities are subscribed to are pushed to the SRv6 container stored by the DPU/NTMD. For example, the DPU may store a segment routing policy table that indicates the services associated with each subscriber identity and the controller may push updates to this table to modify one or more services associated with particular subscriber identities. Further, the controller may also push updates regarding the destination micro service instances associated with one or more subscriber identities. According to some embodiments, the controller may push an updated segment routing policy table to the DPU/NTMD which may replace the previous version.

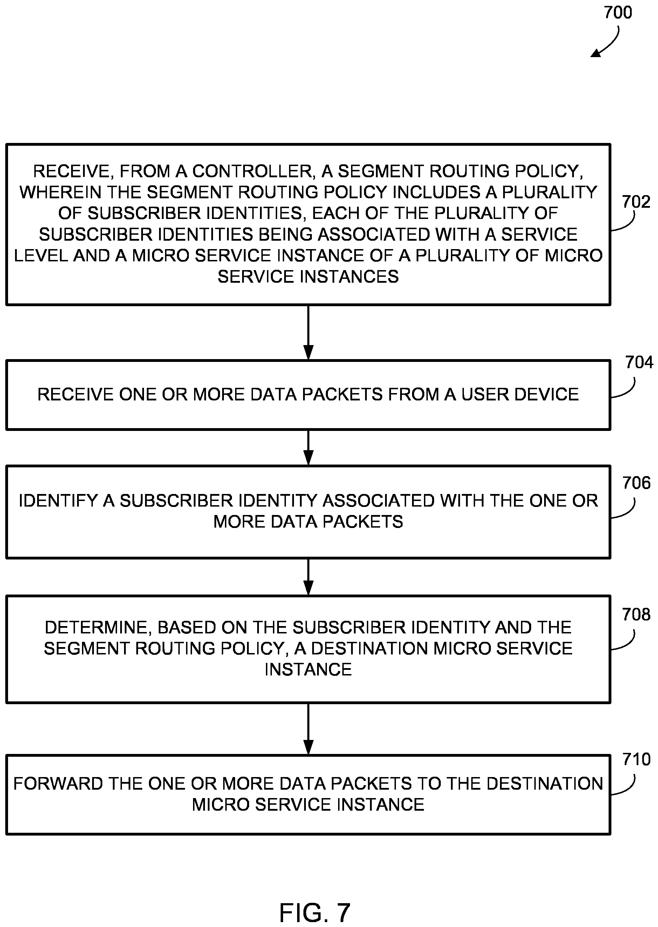

An exemplary method of providing subscriber aware network traffic routing in a 5G core network will be described with reference to FIGS. 4-7. Referring more specifically to FIG. 7, a flow diagram of an example method for providing subscriber aware network traffic management within a 5G core network is illustrated. In step 702 in this example, the network traffic management device may receive a segment routing policy from a controller. The segment routing policy may include a plurality of subscriber identities. Each of the plurality of subscriber identities may be associated with one or more service levels and a micro service instance of a plurality of micro service instances. According to some embodiments, the controller generates the segment routing policy based on observed states of the network (e.g., loads on micro service instances) and services levels (e.g., YouTube Premium) associated with subscriber identities that are provisioned by service providers (e.g., YouTube).

In step 704, the NTMD may receive one or more data packets from a user device. For example, a subscriber gateway may receive incoming network traffic originating from a smartphone of a user. As will be appreciated by those of skill in the art, the incoming network packets will include a source IP address and a destination IP address.

In step 706, the NTMD may identify a subscriber identity associated with the one or more data packets. For example, according to some embodiments, the subscriber identity is identified using a 5G control plane that associates internet protocol (IP) addresses with phone numbers. In other words, in some embodiments, the NTMD may access a binding table that associates subscriber identities (e.g., SUPIs) with IP addresses, such that each data packet can be associated with a particular subscriber identity such that traffic originating from the same subscriber identity can all be routed to the same place. According to some embodiments, the NTMD may locally store a copy of a binding table (or a portion thereof) that it has received from the controller (i.e., N6 controller or NTMD controller). As described above, the NTMD controller may maintain a current binding table by subscribing to 5G SMF's API service, which publishes binding information of subscribers upon user equipment registration to the 5G network. The NTMD controller may push the latest state to the distributed NTMD instances with regards to the subscriber identity and the IP address binding for the specific NTMD instance.

As a mobile broadband service may have tens of millions or even 100 million subscribers, the binding table stored by the NTMD controller may be very large, containing a corresponding number of entries. Such a large binding table may be difficult to store and efficiently handle that many subscribers due to performance and memory space constraints. Accordingly, in some embodiments, the NTMD controller may maintain a master binding table having all of the subscriber binding information, but may push only a portion of the table to each NTMD in the system. For example, in a 5G network having 100 million subscribers a 5G UPF may only be responsible for 100,000 subscribers, meaning that 1,000 5G UPFs would be needed to support the 100 million subscribers. In this case, the NTMD controller may maintain a master binding table having binding information on all 100 million subscribers, but may only send a portion of the master table having information relating to 100,000 subscribers. For any given 5GUPF the 100,000 subscribers in the binding table sent to it by the NTMD controller may be unique. By only distributing binding information on the particular subscribers a particular 5G UPF is responsible for to the 5G UPF, the system can allow for more efficient operation of the 5G UPFs. In other words, in this example, each NTMD will only have to scale to 100,000 subscribers worth of table processing. Thus, the type of data stored by each UPF/NTMD in its respective binding table will be the same, but the subscriber ranges may be different for every NTMD instance.

In step 708, the NTMD may determine, based on the subscriber identity and the segment routing policy, a destination micro service instance. The destination micro service instance may be a particular micro service instance of the plurality of micro service instances. According to some embodiments, the destination micro service instance is determined by identifying a micro service instance associated with the subscriber identity in the segment routing policy. In other words, the NTMD may perform a lookup in a table of the segment routing policy for an entry listing the subscriber identity that is associated with the one or more data packets from the user device and may identify the corresponding micro service instance listed in that entry as being the destination micro service instance.

According to some embodiments, the destination micro service instance is configured to provide a service level to the user device that corresponds to a service level associated with the subscriber identity in the segment routing policy. For example, if the subscriber identity is associated with a service level or security policy, then the destination micro service instance will have been selected (e.g., previously, by the controller and entered into the segment routing policy table) to be a micro service instance that is configured to provide the associated service level. For example, to achieve a premium service level, a micro service instance may have the number of traffic flows it is allowed to receive capped at a maximum number, whereas micro service instances that are not configured to provide premium level service may be configured to receive many more traffic flows (and thereby possibly provide a reduced level of quality/service to the traffic flow). Alternatively, particular micro service instances may be configured to implement different policies, such as security policies (e.g., filtering out age-restricted content) such that a traffic flow directed to such a micro service instance will have the policy applied to it by the micro service instance.

In step 710, the NTMD may forward the one or more data packets to the destination micro service instance. For example, the NTMD may modify the header of the one or more data packets to change the destination to be the specified destination micro service instance, by for example, modifying the destination IP addresses of data packets or modifying a series of traversal paths that could be defined in the SRv6 header. Such rerouting of data packets to specific micro service instances can happen very quickly, as the routing protocol is stateless and thus takes a small amount of processing power to execute. In other words, the segment routing policy stored by the NTMD is static (until an updated version is provided by the controller), allowing the NTMD to quickly look up the identified subscriber identity and associated micro service instance that is designated as the destination for that user's traffic. Furthermore, by directing traffic to particular micro service instances that are configured to provide a level of service that corresponds to the user/subscriber identity's service level subscriptions, embodiments of the present disclosure can provide service level assurance.

Although the functionalities described herein are performed by an NTMD, which may be for example, a subscriber gateway device, in some embodiments, some or all of these functions may be performed by a DPU that is plugged into a subscriber gateway device. For example, the DPU may receive the segment routing policy from the controller, store the segment routing policy, process data packets received by the subscriber gateway to identify the subscriber identity associated with the data packets, determine a destination micro service instance based on the subscriber identity and the segment routing policy and cause the data packets to be routed to the destination micro service instance.

According to some embodiments, the method may further include: receiving an updated segment routing policy including one or more updated service levels and/or updated micro service instances; identifying the subscriber identity associated with the one or more additional data packets; determining, based on the subscriber identity and the updated segment routing policy, an updated destination micro service instance; and forwarding the one or more data packets to the updated destination micro service instance. In other words, in some embodiments, the controller may update the segment routing policy in response to determining that one or more micro service instances have too great of a load and/or in response to receiving new information from service providers regarding service levels and policies that particular users/subscriber identities have subscribed to.

With this technology, subscriber-aware end-to-end routing of network traffic can be achieved, which allow for the effective application of policies and service levels to particular network traffic flows based on the subscriber identity associated with the traffic flow. Thus, the system can advantageously provide service level assurance to users that corresponds to services and policies the users are subscribed to. Further, the system can greatly increase scalability that is currently limited by conventional implementations due to the cpu intensive load balancing schemes that are mandated by the unnecessary aggregation of traffic at subscriber gateways that must later be disaggregated based on subscribers. This conventional approach also tends to introduce a trombone-ing effect of inefficient traffic paths when multiple vendor functions are at play that is eliminated by the disclosed techniques. The system advantageously eliminates load balancing within clusters, as the load balancing can be performed by the controller in advance of network traffic reaching the clusters and can improve efficiency in traffic paths by virtue of the controller's monitoring of the end-to-end paths and its ability to identify an optimal routing action, whether it be to identify a new path for a particular traffic flow or cause one or more new micro service instances to be instantiated.

Having thus described the basic concept of the invention, it will be rather apparent to those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims and equivalents thereto.

## Claims

1. A method implemented by a network traffic management device the method comprising:
receive, from a controller, a segment routing policy, wherein the segment routing policy comprises a plurality of subscriber identities, each of the plurality of subscriber identities being associated with a service level and a micro service instance of a plurality of micro service instances;
receive one or more data packets from a user device;
identify a subscriber identity associated with the one or more data packets;
determine, based on the subscriber identity and the segment routing policy, a destination micro service instance; and
forward the one or more data packets to the destination micro service instance.

2. The method of claim 1, wherein the subscriber identity is identified using a 5G control plane that associates internet protocol (IP) addresses with phone numbers.

3. The method of claim 1, wherein the destination micro service instance is determined by identifying a micro service instance associated with the subscriber identity in the segment routing policy.

4. The method of claim 3, wherein the destination micro service instance is configured to provide a service level to the user device that corresponds to a service level associated with the subscriber identity in the segment routing policy.

5. The method of claim 1, further comprising:
receive, from the controller, an updated segment routing policy comprising one or more updated service levels and/or updated micro service instances;
receive one or more additional data packets from the user device;
identify the subscriber identity associated with the one or more additional data packets;
determine, based on the subscriber identity and the updated segment routing policy, an updated destination micro service instance; and
forward the one or more data packets to the updated destination micro service instance.

6. A network traffic management device, comprising memory comprising programmed instructions stored thereon and one or more processors configured to be capable of executing the stored programmed instructions to perform the steps of the method according to one or more of the claims 1 to 5.

7. A non-transitory computer readable medium having stored thereon instructions comprising executable code that, when executed by one or more processors, causes the processors to perform the steps of the method according to one or more of the claims 1 to 5.

8. A network traffic management system, comprising one or more network traffic management devices, controllers or data processing units with memory comprising programmed instructions stored thereon and one or more processors configured to be capable of executing the stored programmed instructions to perform the steps of the method according to one or more of the claims 1 to 5.
